# EUROPEAN PATENT SPECIFICATION

(11) **EP 2 518 547 B1**
(45) Date of publication and mention of the grant of the patent: **20.05.2020**
(21) Application number: 10839266.3
(22) Date of filing: 15.12.2010
(51) Int. Cl.: G02B 6/12, G02B 6/13

(54) **PLANAR LIGHTWAVE CIRCUIT AND PRODUCTION METHOD FOR PLANAR LIGHTWAVE CIRCUIT**
PLANARER LICHTWELLENSCHALTKREIS UND HERSTELLUNGSVERFAHREN FÜR DEN PLANAREN LICHTWELLENSCHALTKREIS
CIRCUIT OPTIQUE PLANAIRE ET PROCÉDÉ DE FABRICATION DE CELUI-CI

(30) Priority: 22.12.2009 JP 2009289995
(43) Date of publication of application: 31.10.2012
(73) Proprietor: NTT Electronics Corporation, Yokohama-shi Kanagawa 221-0031 (JP)
(72) Inventor: JINNOUCHI, Yoshiteru, Yokohama-shi, Kanagawa 221-0031 (JP); NAITO, Masahiko, Yokohama-shi, Kanagawa 221-0031 (JP); MURASAWA, Atsushi, Yokohama-shi, Kanagawa 221-0031 (JP)
(74) Representative: Bobbert & Partner Patentanwälte PartmbB
(86) International application number: PCT/JP2010/072569
(87) International publication number: WO 2011/078033

(56) References cited:
- GB-A- 2 402 494
- JP-A- 7 063 934
- JP-A- 8 069 021
- JP-A- 10 048 440
- JP-A- 10 227 933
- JP-A- 2000 241 645
- JP-A- 2000 329 954
- JP-A- 2002 082 241
- JP-A- 2002 139 640
- JP-A- 2002 228 862
- JP-A- 2004 037 778
- JP-A- 2004 199 046
- JP-A- 2005 338 467
- JP-A- 2007 310 297
- JP-A- 2010 020 180
- DOERR, C.R. ET AL.: 'Compact and Low-Loss Manner of Waveguide Grating Router Passband Flattening and Demonstration in a 64-Channel Blocker/ Multiplexer' IEEE PHOTONICS TECHNOLOGY LETTERS vol. 14, no. 1, January 2002, pages 56 - 58, XP011432293

## Description

### TECHNICAL FIELD

The present invention relates to a planar lightwave circuit including optical waveguides formed on a planar substrate, and a method of producing the planar lightwave circuit.

### BACKGROUND ART

Silica based optical waveguides have polarization dependence attributable to stress birefringence, therefore, etching (over-etching) is performed deeply up to below the optical waveguides such that the stress birefringence is removed, whereby the polarization dependence is remedied (see Patent Literature 1, for instance). GB 2 402 494 A discloses an integrated optic device having two arrayed waveguide gratings coupled to each other which can be made polarization independent by adjustment of their respective over-etch depth and dummy patterns provided on each of them.

### CITATION LIST

### PATENT LITERATURES

Patent Literature 1: Japanese Patent Application Laid-Open (JP-A) No. 2002-139640

### DISCLOSURE OF INVENTION

### PROBLEM TO BE SOLVED BY THE INVENTION

However, stress birefringence of optical waveguides depends on the density of their pattern. For example, a sparse pattern like Mach-Zehnder Interferometer (MZI) and a dense pattern like Arrayed-Waveguide Grating (AWG) are different from each other in stress birefringence. Therefore, in a case of a planar lightwave circuit including a plurality of interferometers on one substrate, their stress birefringence depends on circuits, so that, it is difficult to simultaneously make all of the interferometers independent from polarization by over-etching.

Therefore, an object of the present invention is to provide a planar lightwave circuit that can reduce differences in stress birefringence among circuits, and simultaneously make all of interferometers independent from polarization by over-etching, and a method of producing the planar lightwave circuit.

### MEANS FOR SOLVING PROBLEM

In order to achieve the object described above, in the present invention, dummy patterns are provided on both sides of each of optical waveguides having a low optical waveguide density, such that differences in stress birefringence according to differences in optical waveguide density are remedied.

Specifically, a planar lightwave circuit according to the present invention includes the features of claim 1.

If the dummy patterns are provided on both sides of each of the optical waveguides, it is possible to change the stress birefringence. Therefore, the present invention can provide a planar light circuit that can reduce differences in stress birefringence among circuits, and simultaneously make all of the interferometers independent from polarization by over-etching, by providing the dummy patterns on both sides of each of optical waveguides having a low optical waveguide density.

In the planar lightwave circuit according to the present invention, there is a characteristic that the dummy patterns are the same material as the optical waveguides of the interferometers. In optical waveguide forming processes, the dummy patterns can be also formed, therefore, a production cost can be reduced.

In the planar lightwave circuit according to the present invention, the dummy patterns may have substantially the same optical waveguide density as the interferometer having the highest optical waveguide density.

A method of producing a planar lightwave circuit according to the present invention includes the features of claim 5.

In the etching process of forming the optical waveguides, it is possible to provide the dummy patterns on both sides of each of optical waveguides having a low optical waveguide density. Therefore, the present invention can provide a method of producing the planar lightwave circuit that can reduce differences in stress birefringence among circuits, and simultaneously make all of the interferometers independent from polarization by over-etching.

### EFFECT OF THE INVENTION

The present invention can provide a planar lightwave circuit and a method of producing the planar lightwave circuit that can reduce differences in stress birefringence among circuits, and simultaneously make all of interferometers independent from polarization by over-etching.

### BRIEF DESCRIPTION OF DRAWINGS

FIG. 1 is a diagram illustrating a planar lightwave circuit according to the related art.
FIG. 2 is a diagram illustrating polarization dependence of the planar lightwave circuit according to the related art.
FIGS. 3(a) and 3(b) are diagrams illustrating a planar lightwave circuit according to the present invention. FIG. 3 (a) is a diagram illustrating the entire planar lightwave circuit, and FIG. 3(b) is an enlarged view illustrating an MZI portion.
FIG. 4 is a diagram illustrating polarization dependence of the planar lightwave circuit according to the present invention.
FIG. 5 is a diagram illustrating the planar lightwave circuit according to the present invention.
FIG. 6 is a diagram illustrating a relation between the size of a gap and the polarization dependence.
FIGS. 7(a) to 7(e) are diagrams illustrating a method of producing a planar lightwave circuit according to the present invention. FIG. 7(a) is a diagram illustrating a film forming process, and FIG. 7(b) to 7(d) are diagrams illustrating an etching process.
FIG. 8 is a diagram illustrating the planar lightwave circuit according to the present invention.
FIG. 9 is a diagram illustrating the planar lightwave circuit according to the present invention.

### MODE(S) FOR CARRYING OUT THE INVENTION

Embodiments of the present invention will be described with reference to the accompanying drawings. The embodiments described below are examples of the present invention, and the present invention is not limited to the following embodiments. Further, throughput the present specification and the drawings, components having the same reference numeral are identical to each other.

### (First Embodiment)

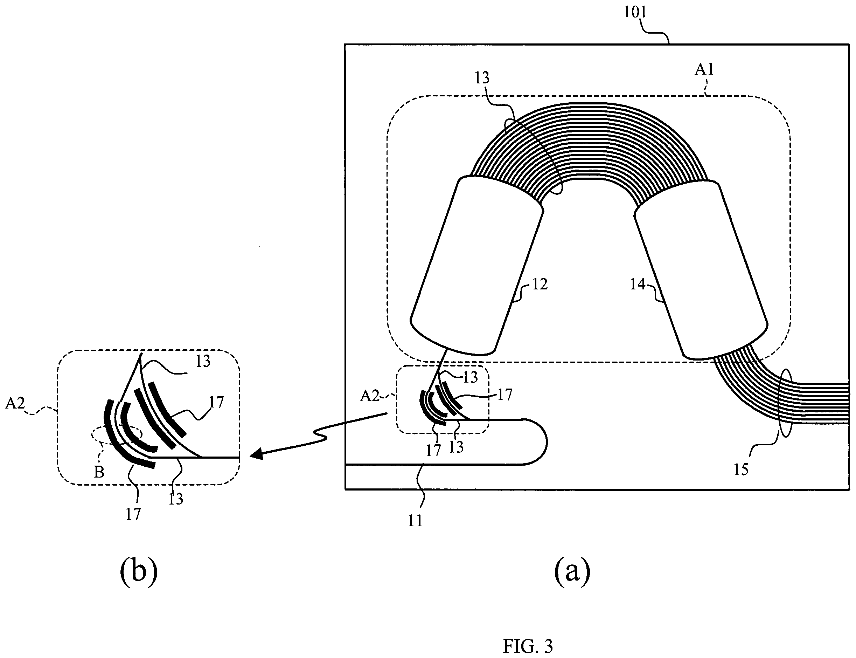

A planar lightwave circuit of the present embodiment includes two interferometers each of which includes a plurality of optical waveguides, and dummy patterns that is disposed on both sides of each of the optical waveguides of the interferometer, having an optical waveguide density lower than the highest optical waveguide density, of the two interferometers. FIG. 3 is a diagram illustrating a planar lightwave circuit 101 according to an example of the present embodiment. The planar lightwave circuit 101 includes an interferometer A1 and another interferometer A2. The interferometer A1 is an AWG including a plurality of optical waveguides 13 connecting two slab waveguides 12 and 14, and the interferometer A2 is an MZI composed of two optical waveguides 13, furthermore, in the planar lightwave circuit 101, in order to broaden the transmission band of the AWG, the MZI is disposed at the front stage of the AWG. FIG. 3(a) is a diagram illustrating the entire planar lightwave circuit 101, and FIG. 3(b) is an enlarged view illustrating an MZI portion.

The optical waveguide density of the interferometer A2 is lower than the optical waveguide density of the interferometer A1. For this reason, the planar lightwave circuit 101 includes dummy patterns 17 on both sides of each of the optical waveguides 13 of the interferometer A2. The dummy patterns 17 are the same material as the optical waveguides 13 of the interferometer A2. Like in the interferometer A2 of FIG. 3, the dummy patterns 17 may be disposed in a linear form having a predetermined width on both sides of a portion of each of the optical waveguides 13 branching at couplers of the MZI.

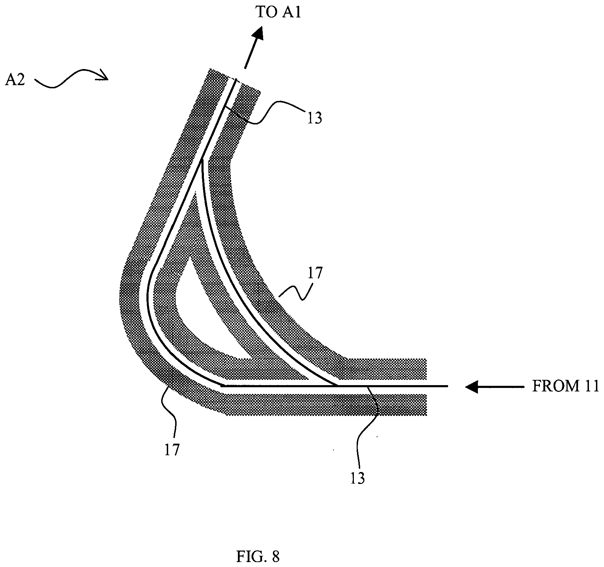

FIG. 8 is a diagram illustrating another example of the interferometer A2. Like in the interferometer A2 of FIG. 8, the dummy patterns 17 may be disposed in a liner form having a predetermined width for all of the two couplers of the MZI and the optical waveguides 13 branching at the couplers. Also, the dummy patterns 17 may be composed with a plurality of arranged optical waveguides such that the optical waveguide density becomes substantially the same as that of the optical waveguides 13 of the interferometer A1.

A method of producing the planar lightwave circuit 101 includes a film forming process of sequentially forming an undercladding layer and a core layer on a substrate, and after the film forming process, an etching process of etching the core layer except for portions to be optical waveguides and portions to be dummy patterns to be disposed on both side of each of the optical waveguides, and removing portions of the undercladding layer, below the portions of the core layer removed by the etching, in a depth direction.

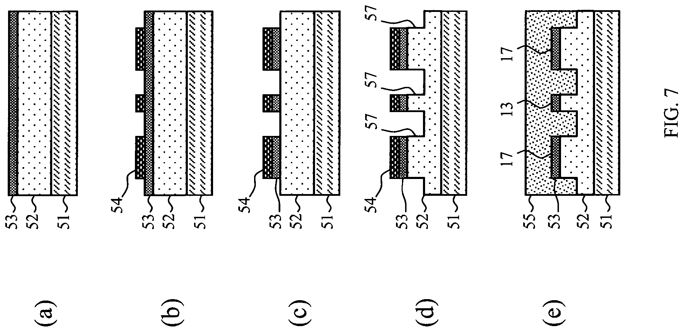

FIG. 7 is a diagram illustrating the method of producing the planar lightwave circuit 101. FIG. 7(a) illustrates the film forming process, and FIGS. 7(b) to 7(d) illustrate the etching process. First, the film forming process will be described. An undercladding layer 52 primarily containing SiO₂ is deposited on a Si substrate (planar substrate) 51 by a flame hydrolysis deposition method, then, a core layer 53 primarily containing SiO₂ and containing GeO₂ as a dopant is deposited thereon, and annealing is performed to make the layers transparently vitrified (FIG. 7(a)).

Next, the etching process will be described. A resist pattern 54 of an optical waveguide pattern and a dummy pattern is formed by a photolithographic technique (FIG. 7(b)). Next, unnecessary portions of the core layer 53 are first removed by its thickness (FIG. 7(c)), and subsequently, etching on the undercladding layer 52 is performed up to a depth of 4 µm, such that ridges 57 are formed (FIG. 7(d)).

After the etching process is completed, the resist pattern 54 is removed, and an overcladding layer 55 primarily containing SiO₂ is formed (FIG. 7(e)).

In the planar lightwave circuit 101 created by the above-mentioned production method, the size of a cross section of a core is 4.5 µm × 4.5 µm, a relative refractive index is 1.5%, and the ridges of the undercladding are 4 . 0 µm in height. Further, in the interferometer A1 (AWG), the optical waveguides 13 are disposed at intervals of 13.7 µm on the inside of the array, and at intervals of 8.1 µm on the outside of the array. Furthermore, in the interferometer A2 (MZI), the interval of the optical waveguides (the distance between two arms) is up to 1500 µm. The dummy patterns 17 are long from one to the other coupler of the MZI, and the widths of the dummy patterns 17 are set to 500 µm. In a case where each dummy pattern 17 is composed of a plurality of arrayed optical waveguides, the intervals of these optical waveguides are set to about the intervals (8.1 µm to 13.7 µm) between the optical waveguides 13.

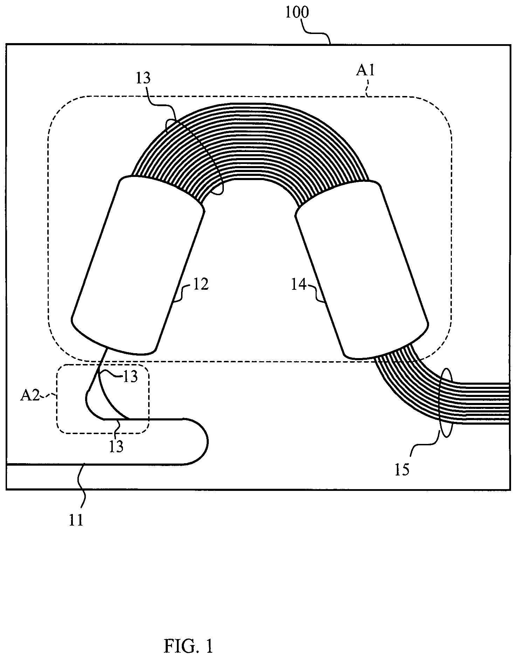

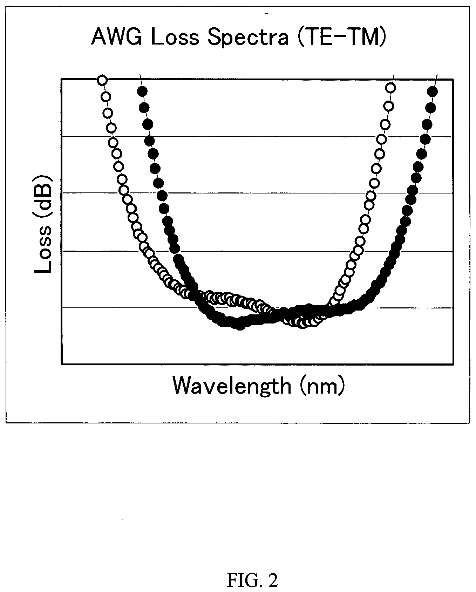

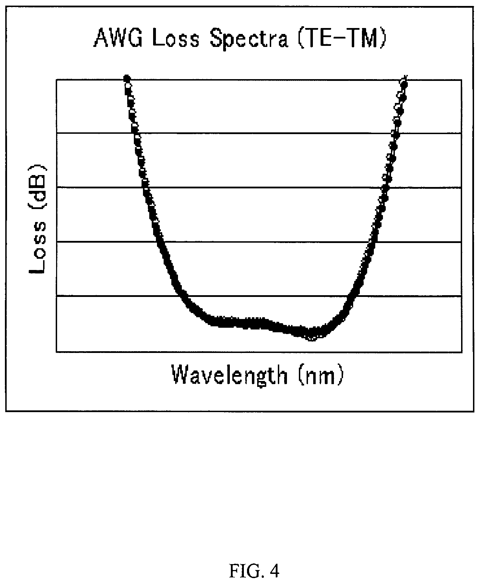

The polarization dependence of the planar lightwave circuit 101 created as described above will be compared with that of a planar lightwave circuit 100 with no dummy patterns according to the related art. FIG. 1 is a diagram illustrating the planar lightwave circuit 100 according to the related art, and FIG. 2 is a diagram illustrating the polarization dependence illustrating the planar lightwave circuit 100. FIG. 4 is a diagram of the polarization dependence of the planar lightwave circuit 101.

In FIGS. 2 and 4, horizontal axes represent a wavelength (nm), and vertical axes represent a light loss (dB). It can be seen from FIG. 2 that, in the planar lightwave circuit 100, a difference in center wavelength occurs between a TE-polarized wave and a TM-polarized wave, and thus any one or both of an interferometer A1 and another interferometer A2 have the polarization dependence. Meanwhile, as illustrated in FIG. 4, in the planar lightwave circuit 101, the center wavelength of a TE-polarized wave coincides with that of a TM-polarized wave, and thus it is possible to simultaneously remedy the polarization dependence of the interferometer A1 and the interferometer A2.

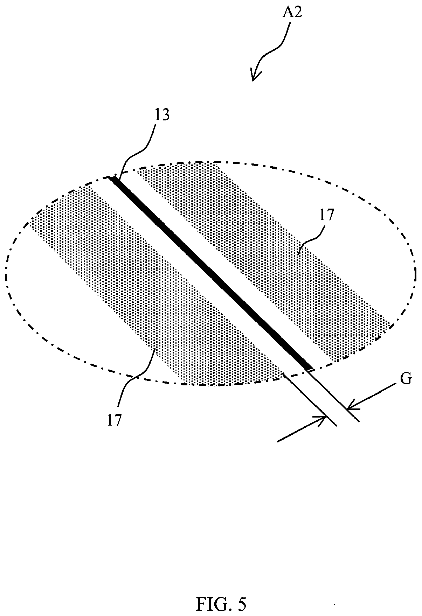

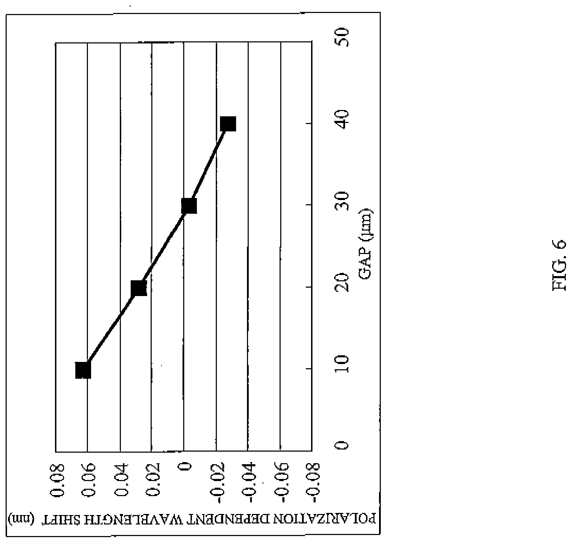

FIG. 5 is an enlarged view of a portion B of the interferometer A2 of FIG. 3 (b) . FIG. 6 is a diagram illustrating a relation between a gap G of the interferometer A2 and the polarization dependence. Interferometers A2 having gaps G of 10 µm to 40 µm were prepared, and the polarization dependence was examined. The polarization dependence was evaluated with a difference PDλ (µm) in center wavelength between a TE-polarized wave and a TM-polarized wave. As the gap G changed from 10 µm to 40 µm, the polarization dependent wavelength shift changed from 0.063 µm to -0.027 µm. Therefore, it is possible to adjust the polarization dependence by changing the gap G of the interferometer A2.

The above is an example of the present embodiment, and even in a case of a combination of a variable optical attenuator (VOA) and an AWG, and a case where a planar lightwave circuit has three or more interferometers, if the polarization dependence of each of interferometers except for an interferometer having the highest optical waveguide density is adjusted by forming dummy patterns with a gap G according to the optical waveguide density of the corresponding interferometer, it is possible to simultaneously make all of the interferometers independent from polarization.

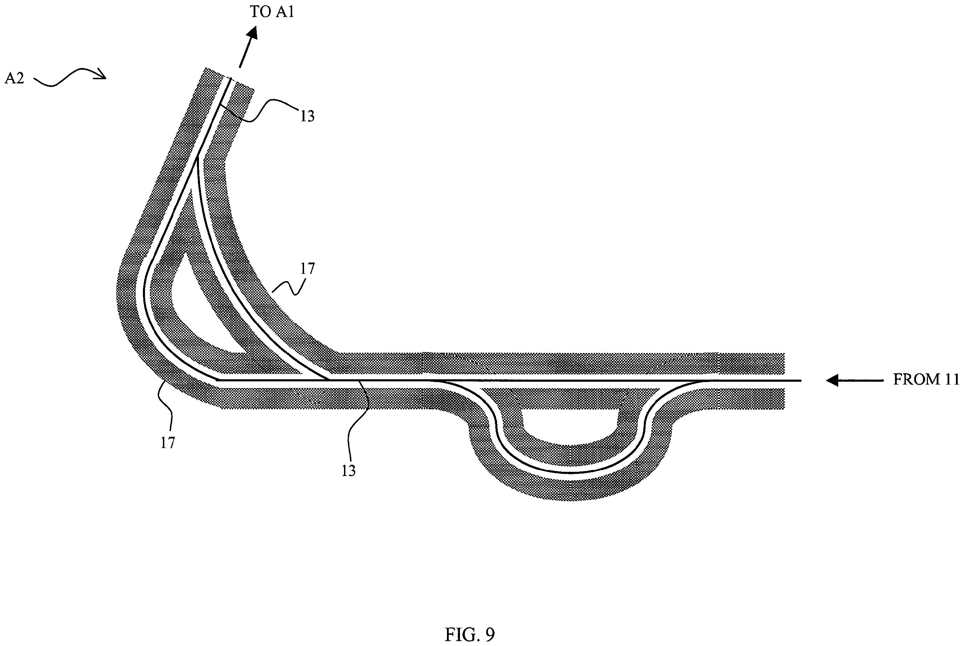

FIG. 9 is a diagram illustrating a portion of an interferometer A2 of a planar lightwave circuit not forming part of the invention. In the interferometer A2 of FIG. 9, two MZIs are connected, and dummy patterns 17 are disposed in a linear form having a predetermined width for two couplers of each MZI, all of optical waveguides 13 branching at the couplers, and a connection between the two MZIs. If the interferometer A2 including the two MZIs is disposed at the front stage of the interferometer A1, the transmission band of the AWG is further expanded as compared to a case where the interferometer A2 having one MZI is provided.

### EXPLANATIONS OF REFERENCE NUMERALS

- 11:: channel waveguide for input
- 12:: slab waveguide on input side
- 13:: optical waveguide
- 14:: slab waveguide on output side
- 15:: channel waveguide for output
- 17:: dummy pattern
- 51:: Si substrate
- 52:: undercladding layer
- 53:: core layer
- 54:: resist pattern
- 55:: overcladding layer
- 57:: ridge
- 100, 101:: planar lightwave circuit

## Claims

1. A planar lightwave circuit (101) having a core layer (53), an undercladding layer (52), and an overcladding layer (55), and comprising two interferometers (A1, A2) each of which is composed of a plurality of optical waveguides (13), the two interferometers (A1, A2) having different optical waveguide density, wherein the interferometer (A2) having the lower optical waveguide density is a Mach-Zehnder interferometer, and wherein an arrayed waveguide grating is connected to the Mach-Zehnder Interferometer, the arrayed waveguide grating being the interferometer (A1) of the higher optical waveguide density,
wherein the interferometer (A2) of the planar lightwave circuit (101) having the lower optical waveguide density further comprises:
dummy patterns (17) that are disposed on both sides of each of the optical waveguides (13) of the interferometer (A2) having the lower optical waveguide density, and
gaps between the dummy patterns (17) and the optical waveguides (13) of the interferometer (A2) having the lower optical waveguide density such that a polarization dependence of the entire planar lightwave circuit (101) is set to zero, wherein the polarization dependence is a difference between a center wavelength of a loss of a TE-polarized wave and a center wavelength of a loss of a TM-polarized wave, and wherein the dummy patterns (17) and the optical waveguides (13) of the interferometer (A2) having the lower optical waveguide density include part of both the core layer (53) and the undercladding layer (52) and are, as well as the gaps, covered by the overcladding layer (55).

2. The planar lightwave circuit (101) according to claim 1, wherein:
the dummy patterns (17) are of the same material as the optical waveguides (13) of the interferometers (A1, A2).

3. The planar lightwave circuit (101) according to claim 1 or 2, wherein:
the dummy patterns (17) have substantially the same optical waveguide density as the interferometer (A1) having the highest optical waveguide density.

4. The planar lightwave circuit (101) according to any one of claims 1 to 3, wherein:
the interferometer (A2) having the optical waveguide density lower than the highest optical waveguide density is a variable optical attenuator, and an arrayed waveguide grating is connected to the variable optical attenuator.

5. A method of producing the planar lightwave circuit (101) according to any one of claims 1 to 4, comprising:
a film forming process of sequentially forming an undercladding layer (52) and a core layer (53) on a substrate (51);
after the film forming process, an etching process of etching the core layer (53) except for portions to be optical waveguides (13) and portions to be dummy patterns (17) to be disposed on both sides of each of the optical waveguides (13), and removing portions of the undercladding layer (52), below the portions of the core layer (53) removed by the etching, in a depth direction; and an adjusting process of adjusting gaps between the dummy patterns (17) and the corresponding optical waveguides (13), and finding the gaps for setting a polarization dependence of the entire planar lightwave circuit (101) to zero, wherein the polarization dependence is a difference between a center wavelength of a loss of a TE-polarized wave and a center wavelength of a loss of a TM-polarized wave.

## Patentansprüche

1. Eine planare Lichtwellenschaltung (101) mit einer Kernschicht (53) und einer unteren Mantelschicht (52) und einer oberen Mantelschicht (55) und zwei Interferometer (A1, A2) umfassend, von denen jedes aus einer Vielzahl von optischen Wellenleitern (13) aufgebaut ist, wobei die zwei Interferometer (A1, A2) jeweils eine unterschiedliche optische Wellenleiterdichte aufweisen, wobei das Interferometer (A2) mit der niedrigeren optischen Wellenleiterdichte ein Mach-Zehnder-Interferometer ist und wobei ein Gitter mit einem Wellenleiter-Array mit dem Mach-Zehnder-Interferometer verbunden ist, wobei das Gitter mit dem Wellenleiter-Array das Interferometer (A1) mit der höheren optischen Wellenleiterdichte ist,
wobei das Interferometer (A2) der planaren Lichtwellenschaltung (101) mit der niedrigeren optischen Wellenleiterdichte zudem umfasst:
- Scheinmuster (17), die auf beiden Seiten von jedem einzelnen der optischen Wellenleiter (13) des Interferometers (A2) mit der niedrigeren optischen Wellenleiterdichte angeordnet sind, und
- Lücken zwischen den Scheinmustern (17) und den optischen Wellenleitern (13) des Interferometers (A2) mit der niedrigeren optischen Wellenleiterdichte, sodass eine Polarisationsabhängigkeit der gesamten planaren Lichtwellenschaltung (101) auf null gesetzt ist,
wobei die Polarisationsabhängigkeit eine Differenz zwischen einer zentralen Wellenlänge eines Verlusts einer TEpolarisierten Welle und einer zentralen Wellenlänge eines Verlusts einer TM-polarisierten Welle ist, und
wobei die Scheinmuster (17) and die optischen Wellenleiter (13) des Interferometers (A2) mit der niedrigeren optischen Wellenleiterdichte einen Teil von sowohl der Kernschicht (53) als auch der unteren Mantelschicht (52) umfassen und, ebenso wie die Lücken, mit der oberen Mantelschicht (55) bedeckt sind.

2. Die planare Lichtwellenschaltung (101) nach Anspruch 1, wobei:
- die Scheinmuster (17) aus demselben Material wie die optischen Wellenleiter (13) der Interferometer (A1, A2) sind.

3. Die planare Lichtwellenschaltung (101) nach Anspruch 1 oder 2, wobei:
- die Scheinmuster (17) im Wesentlichen dieselbe optische Wellenleiterdichte aufweisen wie das Interferometer (A1) mit der höchsten optischen Wellenleiterdichte.

4. Die planare Lichtwellenschaltung (101) nach einem der Ansprüche 1 bis 3, wobei:
- das Interferometer (A2) mit der optischen Wellenleiterdichte, die niedriger als die höchste optische Wellenleiterdichte ist, ein variables optisches Dämpfungsglied ist und ein Gitter mit einem Wellenleiter-Array mit dem variablen optischen Dämpfungsglied verbunden ist.

5. Ein Verfahren zum Herstellen der planaren Lichtwellenschaltung (101) nach einem der Ansprüche 1 bis 4, umfassend:
- einen filmformenden Prozess mit einem sequentiellen Formen einer unteren Mantelschicht (52) und einer Kernschicht (53) auf einem Substrat (51),
- nach dem filmformenden Prozess, einen Ätzprozess mit einem Ätzen der Kernschicht (53) außer von Anteilen, die optische Wellenleiter (13) bilden sollen, und von Anteilen, die Scheinmuster (17) bilden sollen, die auf beiden Seiten auf jedem der optischen Wellenleiter (13) angeordnet werden sollen, und Entfernen von Anteilen der unteren Mantelschicht (52), unterhalb der Anteile der Kernschicht (53), die durch das Ätzen entfernt wurden, in einer Tiefenrichtung; und einen Einstellprozess zum Einstellen von Lücken zwischen den Scheinmustern (17) und den korrespondierenden optischen Wellenleitern (13), und Finden der Lücken zum Setzen einer Polarisationsabhängigkeit der gesamten planaren Lichtwellenschaltung (101) auf null, wobei die Polarisationsabhängigkeit eine Differenz zwischen einer zentralen Wellenlänge eines Verlusts einer TEpolarisierten Welle und einer zentralen Wellenlänge eines Verlusts einer TM-polarisierten Wellenlänge ist.

## Revendications

1. Un circuit d'onde lumineuse planaire (101) ayant une couche centrale (53), une couche de sous-gainage (52) ainsi qu'une couche de sur-gainage (55), et comprenant deux interféromètres (A1, A2) dont chacun est composé d'une pluralité de guides d'ondes optiques (13),
les deux interféromètres (A1, A2) ayant une densité de guides d'ondes optiques différente, où l'interféromètre (A2) ayant la plus faible densité de guides d'ondes optiques est un interféromètre de Mach-Zehnder,
et où un réseau en grille de guides d'ondes est relié à l'interféromètre de Mach-Zehnder, le réseau en grille de guides d'ondes étant l'interféromètre (A1) de la plus haute densité de guides d'ondes optiques,
où l'interféromètre (A2) du circuit d'onde lumineuse planaire (101) ayant la plus faible densité de guides d'ondes optiques comprend en outre:
- des motifs factices (17) disposés des deux côtés de chacun des guides d'ondes optiques (13) de l'interféromètre (A2) ayant la plus faible densité de guides d'ondes optiques,
- des espaces entre les motifs factices (17) et les guides d'ondes optiques (13) de l'interféromètre (A2) ayant la plus faible densité de guides d'ondes optiques, de telle sorte qu'une dépendance de polarisation de l'ensemble du circuit d'onde lumineuse planaire (101) est fixée à zéro, où la dépendance de polarisation est une différence entre une longueur d'onde centrale d'une perte d'onde polarisée TE et une longueur d'onde centrale d'une perte d'onde centrale polarisée TM et
où les motifs factices (17) ainsi que les guides d'ondes optiques (13) de l'interféromètre (A2) ayant la plus faible densité de guide d'ondes optiques incluent une partie de la couche centrale (53) et de la couche de sous-gainage (52) et sont, de même que les espaces, recouverts par la couche de sur-gainage (55).

2. Le circuit d'onde lumineuse planaire (101) selon la première revendication, où:
- les motifs factices (17) sont du même matériau que les guides d'ondes optiques (13) des interféromètres (A1, A2).

3. Le circuit d'onde lumineuse planaire (101) selon la revendication 1 ou 2, où:
- les motifs factices (17) ont sensiblement la même densité de guides d'ondes optiques que l'interféromètre (A1) ayant la densité de guides d'ondes optiques la plus haute.

4. Le circuit d'onde lumineuse planaire (101) selon l'une quelconque des revendications 1 à 3, où:
- l'interféromètre (A2) ayant la densité de guides d'ondes optiques inférieure à la densité de guides d'ondes optiques la plus haute est un atténuateur optique variable, et un réseau de guide d'ondes en grille est relié à l'atténuateur optique variable.

5. Un procédé de production du circuit d'onde lumineuse planaire (101) selon l'une quelconque des revendications 1 à 4, comprenant:
- un processus de formation séquentielle de film consistant d'une couche de sous-gainage (52) ainsi que d'une couche centrale (53) sur un substrat (51);
- après le processus de formation de film, un processus de gravure consistant à graver la couche centrale (53), à l'exception des parties destinées à être des guides d'ondes optiques (13) ainsi que des parties destinées à être des motifs factices (17) disposés des deux côtés de chacun des guides d'ondes optiques (13), et consistant à enlever, dans une direction de profondeur, des parties de la couche de sous-gainage (52) sous les parties de la couche centrale (53) enlevées par la gravure; ainsi qu'un processus d'ajustement consistant à ajuster des espaces entre les motifs factices (17) et les guides d'ondes optiques (13) correspondants, et à trouver les espaces pour fixer à zéro une dépendance de polarisation de l'ensemble du circuit d'onde lumineuse planaire (101), où la dépendance de polarisation est une différence entre une longueur d'onde centrale d'une perte d'onde polarisée TE et une longueur d'onde centrale d'onde polarisée TM.
